# EUROPÄISCHE PATENTANMELDUNG

(11) **EP 4 847 275 A1**
(43) Veröffentlichungstag der Anmeldung: **02.12.2026**
(21) Anmeldenummer: 26174154.0
(22) Anmeldetag: 23.04.2026
(51) Int. Cl.: B60C 11/13, B60C 11/03, B60C 11/04

(54) **LAUFSTREIFEN UND FAHRZEUGREIFEN MIT LAUFSTREIFEN**

(30) Priorität: 26.05.2025 DE 102025120545
(71) Anmelder: Continental Reifen Deutschland GmbH, 30175 Hannover (DE)
(72) Erfinder: Özüduru, Ahmet, 30175 Hannover (DE); Micuch, Michal, 020 01 Púchov (SK); Yang, Mengdi, 30175 Hannover (DE)
(74) Vertreter: Continental Corporation

(57) **Zusammenfassung**

Laufstreifen für einen Fahrzeugreifen, umfassend
mindestens eine in einer Längsrichtung einer Lauffläche (1) des Laufstreifens erstreckende Längsrille (2), die einen Rillengrund (3) und eine dem Rillengrund (3) angrenzende Rillenwand (4) aufweist,
wobei entlang der Längsrille (2) sich die Rillenwand (4) von einer Rillentiefe (5) bis zu dem Rillengrund (3) unter einem mit einer Senkrechten der Lauffläche (1) eingeschlossenen ersten Winkel (11) erstreckt,
wobei in einem ersten Querschnitt (13) senkrecht zu der Längsrille (2) der erste Winkel (11) größer ist als ein zweiter Winkel (12),
wobei ausgehend von dem ersten Querschnitt (13) in eine erste Richtung entlang der Längsrille (2) der erste Winkel (11) stetig kleiner wird bis in einem zweiten Querschnitt (14) der erste Winkel (11) kleiner oder gleich dem zweiten Winkel (12) ist,
wobei der Abstand zwischen dem ersten Querschnitt (13) und dem zweiten Querschnitt (14) ein erstes Längssegment (16) bildet,
wobei ausgehend von dem ersten Querschnitt (13) in eine zweite, der ersten Richtung entgegengesetzten Richtung der erste Winkel (11) stetig kleiner wird bis in einem dritten Querschnitt (15) der erste Winkel (11) kleiner oder gleich dem zweiten Winkel (12) ist,
wobei der Abstand zwischen dem ersten Querschnitt (13) und dem dritten Querschnitt (15) ein zweites Längssegment (17) bildet,
wobei entlang der Längsrille (2) sich die Rillenwand (4) unter dem zweiten Winkel (12) von der Lauffläche (1) bis zu der Rillentiefe (5) erstreckt.

## Beschreibung

Die Erfindung betrifft einen Laufstreifen für einen Fahrzeugreifen. Der Laufstreifen umfasst mindestens eine in einer Längsrichtung einer Lauffläche des Laufstreifens erstreckende Längsrille, die einen Rillengrund und eine dem Rillengrund angrenzende Rillenwand aufweist. Entlang der Längsrille erstreckt sich die Rillenwand von einer Rillentiefe bis zu dem Rillengrund unter einem mit einer Senkrechten der Lauffläche eingeschlossenen ersten Winkel. In einem ersten Querschnitt senkrecht zu der Längsrille ist der erste Winkel größer als ein zweiter Winkel. Ausgehend von dem ersten Querschnitt in eine erste Richtung entlang der Längsrille wird der erste Winkel stetig kleiner, bis in einem zweiten Querschnitt der erste Winkel kleiner oder gleich dem zweiten Winkel ist. Der Abstand zwischen dem ersten Querschnitt und dem zweiten Querschnitt bildet ein erstes Längssegment. Ausgehend von dem ersten Querschnitt in einer der ersten Richtung entgegengesetzten Richtung wird der erste Winkel stetig kleiner, bis in einem dritten Querschnitt der erste Winkel kleiner oder gleich dem zweiten Winkel ist. Der Abstand zwischen dem ersten Querschnitt und dem dritten Querschnitt bildet ein zweites Längssegment.

Die EP 4 410 568 A1 offenbart einen Laufstreifen für einen Fahrzeugreifen, wobei als Bestandteil eines Profils eine Umfangsrille in dem Laufstreifen ausgebildet ist. Eine von der Axialrichtung und der Umfangsrichtung aufgespannte, radial in einer ersten oberen Höhe verlaufende imaginäre Ebene schneidet einen ersten Wandabschnitt der Umfangsrille in einer ersten oberen Schnittlinie, wobei die erste obere Schnittlinie einen ersten oberen Winkel mit der Umfangsrichtung einschließt. Eine von der Axialrichtung und der Umfangsrichtung aufgespannte, radial in einer ersten unteren Höhe verlaufende imaginäre Ebene schneidet den ersten Wandabschnitt der Umfangsrille in einer ersten unteren Schnittlinie, wobei die erste untere Schnittlinie einen ersten unteren Winkel mit der Umfangsrichtung einschließt. Hierbei ist die erste obere Höhe größer als die erste untere Höhe. Der erste obere Winkel ist kleiner als der erste untere Winkel.

Die JP 2019-73129 A offenbart einen Luftreifen mit einem verbesserten Verhältnis zwischen Bodenhaftung, Steifigkeit und Wasserabfluss des Luftreifens.

Die DE 10 2018 216 403 A1 offenbart einen pneumatischen Reifen mit einer Hauptrille und einer Rippe, die sich in einer Umfangsrichtung des Reifens erstrecken. Die Hauptrille erstreckt sich in einer zickzackförmigen Weise und ist mit abgeschrägten Oberflächen versehen, wobei die abgeschrägten Oberflächen eine Breite eines öffnenden Endes zu einer Kontaktfläche auf beiden Seiten der Hauptrille auf eine zickzackförmige Weise in einer Breitenrichtung erweitern. Ein Winkel des öffnenden Endes zu der Kontaktfläche in Bezug auf die Umfangsrichtung des Reifens ist kleiner als ein Winkel eines Rillenbodens in Bezug auf die Umfangsrichtung des Reifens zumindest in einem Teil der Hauptrille, der sich auf eine zickzackförmige Weise erstreckt.

Die EP 1 637 357 A1 offenbart einen Luftreifen, der eine ausgezeichnete Drainageeigenschaft auf nasser Fahrbahn sowie eine gleichmäßige Abriebsfestigkeit und Lenkstabilität auf trockener Fahrbahn aufweist.

Die WO 2015/197212 A1 offenbart einen Fahrzeugluftreifen mit einem Laufstreifen mit einer schulterseitigen Blockreihe, deren Blöcke durch in Querrichtung verlaufende Querrillen voneinander getrennt sind, und die durch eine Umfangsrille von einer weiteren Blockreihe oder einem blockartigen strukturierten Profilband getrennt ist. Die Umfangsrille an der Laufstreifenoberfläche ist von zwei parallel zueinander und in Umfangsrichtung verlaufenden Kanten begrenzt und setzt sich aus Umfangsabschnitten zusammen, in welchen der Rillengrund jeweils unter einem spitzen Winkel zur Umfangsrichtung verläuft und ein laufstreifenaußenseitig und ein laufstreifeninnenseitig gelegenes Ende aufweist, wobei zwischen dem Rillengrund und der Laufstreifenoberfläche Rillenflanken verlaufen, deren Neigungswinkel zur radialen Richtung sich über die Umfangserstreckung des Umfangsabschnittes kontinuierlich und zueinander gegenläufig ändern.

Dem Stand der Technik ist gemeinsam, dass eine geräusch- und steifigkeitsoptimierte Umfangsrille verwendet wird, um den lateralen Kantenanteil an der Profiloberfläche auf 0% zu reduzieren. Zum Rillengrund hin wird der laterale Anteil angehoben, um Matsch- und Schneegriff zu erzeugen. An der oberen Kante ist eine Fase vorhanden, um den Profilblock in lateraler Richtung zu versteifen. Zur weiteren Geräuschoptimierung werden die Winkel der lateralen Einschnitte, wie Rillen oder Lamellen, in der Profilmitte groß gewählt, damit der Impuls, der durch das Einrollen an den Blockkanten entsteht, klein gehalten wird.

Daraus ergibt sich der technische Nachteil, dass durch die Fase an dem Profilblock, die eine Versteifung bewirkt, die Geräuschoptimierung nicht vollständig ausgenutzt wird. Die Versteifung erzeugt einen größeren Impuls beim Einrollen in die Reifenaufstandsfläche. Zudem kann durch einen großen Winkel der lateralen Einschnitte ein ungleichmäßiges Abriebbild erzeugt werden.

Vor diesem Hintergrund liegt der Erfindung die erste technische Aufgabe zugrunde, einen Laufstreifen zur Verfügung zu stellen, der eine verbesserte Geräuschabstrahlung im 1000 Hz Bereich sowie ein verbessertes Abriebbild aufweist. Ferner liegt der Erfindung die zweite Aufgabe zugrunde, einen Fahrzeugreifen mit einem verbesserten Laufstreifen zur Verfügung zu stellen.

Die erstgenannte Aufgabe wird gelöst durch einen Laufstreifen mit den Merkmalen gemäß Anspruch 1. Die zweitgenannte Aufgabe wird gelöst durch einen Fahrzeugreifen mit den Merkmalen gemäß nebengeordnetem Anspruch 11. Die Unteransprüche betreffen vorteilhafte Ausführungsformen der Erfindung.

Erfindungsgemäß ist ein Laufstreifen mit den Merkmalen nach Anspruch 1 offenbart.

Der erfindungsgemäße Laufstreifen ist zur Verwendung mit einem Fahrzeugreifen ausgebildet. In einem bestimmungsgemäßen Gebrauch des Laufstreifens mit einem Fahrzeugreifen, d.h. als Teil des Fahrzeugreifens, weist der Laufstreifen genähert die Form eines Mantels eines Kreiszylinders auf. Als separater Laufstreifen ist somit eine Länge in einer Längsrichtung des Laufstreifens gleich einer Länge entlang einer Umfangsrichtung des Fahrzeugreifens.

Der Laufstreifen weist im bestimmungsgemäßen Gebrauch mit einem Fahrzeugreifen zudem eine radial außenliegende Lauffläche auf, die mit einer Straßenoberfläche in Kontakt tritt. Die Lauffläche weist ein Reifenprofil auf, welches mindestens eine Längsrille umfasst, wobei die Längsrille sich in einer Längsrichtung der Lauffläche des Laufstreifens erstreckt. D.h., im bestimmungsgemäßen Gebrauch des Laufstreifens mit einem Fahrzeugreifen verläuft die Längsrille in Umfangsrichtung des Fahrzeugreifens.

Die Längsrille weist einen Rillengrund und eine dem Rillengrund angrenzende Rillenwand auf. Entlang der Längsrille erstreckt sich die Rillenwand von einer Rillentiefe bis zu dem Rillengrund unter einem ersten Winkel, wobei der erste Winkel von der Rillenwand und einer Senkrechten der Lauffläche eingeschlossenen ist.

In einem ersten Querschnitt senkrecht zu der Längsrille ist der erste Winkel größer als ein zweiter Winkel. Ausgehend von dem ersten Querschnitt in eine erste Richtung entlang der Längsrille wird der erste Winkel stetig kleiner. D.h., die erste Richtung zeigt in Längsrichtung des Laufstreifens. Der erste Winkel wird solange kleiner bis in einem zweiten Querschnitt der erste Winkel kleiner oder gleich dem zweiten Winkel ist.

Der Abstand zwischen dem ersten Querschnitt und dem zweiten Querschnitt bildet ein erstes Längssegment.

Ausgehend von dem ersten Querschnitt in eine zweite Richtung, die der ersten Richtung entgegengesetzt ist, wird der erste Winkel stetig kleiner. D.h., die zweite Richtung zeigt ebenfalls in Längsrichtung des Laufstreifens, jedoch entgegengesetzt zu der ersten Richtung. Der erste Winkel wird ebenfalls solange kleiner bis in einem dritten Querschnitt der erste Winkel kleiner oder gleich dem zweiten Winkel ist.

Der Abstand zwischen dem ersten Querschnitt und dem dritten Querschnitt bildet ein zweites Längssegment.

Erfindungsgemäß erstreckt sich entlang der Längsrille die Rillenwand unter dem zweiten Winkel von der Lauffläche bis zu der Rillentiefe.

Der vorliegende erfindungsgemäße Laufstreifen weist somit eine verbesserte Geräuschabstrahlung im 1000 Hz Bereich sowie ein verbessertes Abriebbild auf.

Das neuartige Design der Längsrille bzw. Umfangsrille weist im bestimmungsgemäßen Gebrauch des Laubstreifens mit dem Fahrzeugreifen in Umfangsrichtung an der Oberfläche der Lauffläche eine gerade Kante ohne Fase auf. Dadurch ist die Längsrille bzw. die Umfangsrille im Vergleich weicher und reduziert die Geräuschabstrahlung im 1000-Hz-Bereich. Zusätzlich bietet das neue Design Vorteile beim Abriebbild. Die steilen Winkeln der Lamellen führt dazu, dass die generierten Profilblöcke an den stumpfen Winkeln eine hohe und an den spitzen Winkeln eine geringe Steifigkeit aufweisen, was zu IW führen kann. Um die Steifigkeitsunterschiede auszugleichen und das Risiko für IW zu
reduzieren, wird der Flankenwinkel der Umfangsrille an den stumpfen Blockwinkeln mit ca. 3° klein und an den spitzen Winkeln mit ca. 20° groß gehalten.

Besonders vorteilhaft ist ein Laufstreifen mit den weiteren Merkmalen gemäß Anspruch 2.

Gemäß der vorteilhaften Ausführungsform des Laufstreifens weist das erste Längssegment und das zweite Längssegment unterschiedliche Längen auf.

D.h., in einem bestimmungsgemäßen Gebrauch des Laufstreifens mit einem Fahrzeugreifen verhält sich der Wasserabfluss und die Geräuschentwicklung in Laufrichtung des Fahrzeugreifens anders als in entgegengesetzter Richtung. Durch Variieren der Länge des ersten Lenksegments und des zweiten Lenksegments kann der Wasserabfluss und die Geräuschentwicklung optimiert werden. Beispielsweise kann ein längeres erstes Längssegment und ein kürzeres zweites Längssegment den Wasserabfluss verbessern, wohingegen die Geräuschentwicklung verschlechtert wird. Auf der anderen Seite kann ein kürzeres erstes Längssegment und ein längeres zweites Längssegment die Geräuschentwicklung verbessern, wohingegen der Wasserabfluss verschlechtert wird.

Der vorteilhafte Laufstreifen mit dem Merkmal der unterschiedlichen Längen des ersten Längssegments und des zweiten Längssegments weist neben der verbesserten Geräuschabstrahlung im 1000 Hz Bereich sowie eines verbesserten Abriebbildes im bestimmungsgemäßen Gebrauch mit einem Fahrzeugreifen den Vorteil einer weiteren Optimierung zwischen der Geräuschabstrahlung und dem Drainagevermögen auf.

Besonders vorteilhaft ist ein Laufstreifen mit den weiteren Merkmalen gemäß Anspruch 3.

Gemäß der vorteilhaften Ausführungsform des Laufstreifens bilden das erste Längssegment und das zweite Längssegment ein erstes Segmentpaar, wobei die Rillenwand mindestens ein zweites Segmentpaar aufweist.

D.h., in einem bestimmungsgemäßen Gebrauch des Laufstreifens mit einem Fahrzeugreifen ist durch Erhöhen der Anzahl an Segmentpaaren der Einfluss der Ausgestaltung der Längsrille auf den Wasserabfluss und auf die Geräuschentwicklung größer, so dass in Laufrichtung des Fahrzeugreifens ein größerer Effekt auftritt als in entgegengesetzter Richtung. Durch Variieren der Anzahl an Segmentpaaren kann der Wasserabfluss und die Geräuschentwicklung optimiert werden. Beispielsweise kann eine höhere Anzahl an Segmentpaaren die Geräuschentwicklung verbessern, wohingegen der Wasserabfluss verschlechtert wird. Auf der anderen Seite kann eine niedrigere Anzahl an Segmentpaaren den Wasserabfluss verbessern, wohingegen die Geräuschentwicklung verschlechtert wird.

Der vorteilhafte Laufstreifen mit dem Merkmal eines zweiten Segmentpaares weist neben der verbesserten Geräuschabstrahlung im 1000 Hz Bereich sowie eines verbesserten Abriebbildes im bestimmungsgemäßen Gebrauch mit einem Fahrzeugreifen den Vorteil einer weiteren Optimierung zwischen der Geräuschabstrahlung und dem Drainagevermögen auf.

Besonders vorteilhaft ist ein Laufstreifen mit den weiteren Merkmalen gemäß Anspruch 4.

Gemäß der vorteilhaften Ausführungsform des Laufstreifens weisen das erste Segmentpaar und das zweite Segmentpaar unterschiedliche Längen auf.

D.h., in einem bestimmungsgemäßen Gebrauch des Laufstreifens mit einem Fahrzeugreifen verhält sich der Wasserabfluss und die Geräuschentwicklung in Laufrichtung des Fahrzeugreifens anders als in entgegengesetzter Richtung. Durch Variieren der Länge des ersten Segmentpaares und der Länge des zweiten Segmentpaares kann der Wasserabfluss und die Geräuschentwicklung optimiert werden. Beispielsweise kann ein längeres erstes Segmentpaar und ein kürzeres zweites Segmentpaar den Wasserabfluss verbessern, wohingegen die Geräuschentwicklung verschlechtert wird. Auf der anderen Seite kann ein kürzeres erstes Segmentpaar und ein längeres zweites Segmentpaar die Geräuschentwicklung verbessern, wohingegen der Wasserabfluss verschlechtert wird.

Der vorteilhafte Laufstreifen mit dem Merkmal, dass das erste Segmentpaar und das zweite Segmentpaar unterschiedliche Längen aufweisen, weist neben der verbesserten Geräuschabstrahlung im 1000 Hz Bereich sowie eines verbesserten Abriebbildes im bestimmungsgemäßen Gebrauch mit einem Fahrzeugreifen den Vorteil einer weiteren Optimierung zwischen der Geräuschabstrahlung und dem Drainagevermögen auf.

Besonders vorteilhaft ist ein Laufstreifen mit den weiteren Merkmalen gemäß Anspruch 5.

Gemäß der vorteilhaften Ausführungsform des Laufstreifens weisen das erste Längssegment des ersten Segmentpaares und das erste Längssegment des zweiten Segmentpaares unterschiedliche Längen auf.

D.h., in einem bestimmungsgemäßen Gebrauch des Laufstreifens mit einem Fahrzeugreifen verhält sich der Wasserabfluss und die Geräuschentwicklung in Laufrichtung des Fahrzeugreifens anders als in entgegengesetzter Richtung. Durch Variieren der Länge des ersten Längssegments des ersten Segmentpaares und der Länge des ersten Längssegments des zweiten Segmentpaares kann der Wasserabfluss und die Geräuschentwicklung optimiert werden. Beispielsweise kann ein längeres erstes Längssegment des ersten Segmentpaares und ein kürzeres erstes Längssegment des zweiten Segmentpaares den Wasserabfluss verbessern, wohingegen die Geräuschentwicklung verschlechtert wird. Auf der anderen Seite kann ein kürzeres erstes Längssegment des ersten Segmentpaares und ein längeres erstes Längssegment des zweiten Segmentpaares die Geräuschentwicklung verbessern, wohingegen der Wasserabfluss verschlechtert wird.

Der vorteilhafte Laufstreifen mit dem Merkmal, dass das erste Längssegment des ersten Segmentpaares und das erste Längssegment des zweiten Segmentpaares unterschiedliche Längen aufweisen, weist neben der verbesserten Geräuschabstrahlung im 1000 Hz Bereich sowie eines verbesserten Abriebbildes im bestimmungsgemäßen Gebrauch mit einem Fahrzeugreifen den Vorteil einer weiteren Optimierung zwischen der Geräuschabstrahlung und dem Drainagevermögen auf.

Besonders vorteilhaft ist ein Laufstreifen mit den weiteren Merkmalen gemäß Anspruch 6.

Gemäß der vorteilhaften Ausführungsform des Laufstreifens ist die Rillenwand eine erste Rillenwand, wobei die Längsrille eine zweite Rillenwand aufweist.

D.h., in einem bestimmungsgemäßen Gebrauch des Laufstreifens mit einem Fahrzeugreifen ist durch Einbeziehen der zweiten Rillenwand der Einfluss der Ausgestaltung der Längsrille auf den Wasserabfluss und auf die Geräuschentwicklung größer, so dass in Laufrichtung des Fahrzeugreifens ein größerer Effekt auftritt als in entgegengesetzter Richtung. Durch Variieren der Längen der Längssegmente und der Anzahl an Segmentpaaren an der ersten Rillenwand und an der zweiten Rillenwand kann der Wasserabfluss und die Geräuschentwicklung weiter optimiert werden. Beispielsweise kann eine höhere Anzahl an Segmentpaaren an der ersten Rillenwand und an der zweiten Rillenwand die Geräuschentwicklung verbessern, wohingegen der Wasserabfluss verschlechtert wird. Auf der anderen Seite kann eine niedrigere Anzahl an Segmentpaaren an der ersten Rillenwand und an der zweiten Rillenwand den Wasserabfluss verbessern, wohingegen die Geräuschentwicklung verschlechtert wird.

Der vorteilhafte Laufstreifen mit dem Merkmal, dass die Längsrille eine zweite Rillenwand aufweist, weist neben der verbesserten Geräuschabstrahlung im 1000 Hz Bereich sowie eines verbesserten Abriebbildes im bestimmungsgemäßen Gebrauch mit einem Fahrzeugreifen den Vorteil einer weiteren Optimierung zwischen der Geräuschabstrahlung und dem Drainagevermögen auf.

Besonders vorteilhaft ist ein Laufstreifen mit den weiteren Merkmalen gemäß Anspruch 7.

Gemäß der vorteilhaften Ausführungsform des Laufstreifens ist entlang der Längsrille das erste Segmentpaar der ersten Rillenwand zu dem ersten Segmentpaar der zweiten Rillenwand versetzt angeordnet.

D.h., in einem bestimmungsgemäßen Gebrauch des Laufstreifens mit einem Fahrzeugreifen verhält sich der Wasserabfluss und die Geräuschentwicklung in Laufrichtung des Fahrzeugreifens anders als in entgegengesetzter Richtung. Durch das versetzte Anordnen des ersten Segmentpaares und des zweiten Segmentpaares zueinander kann der Wasserabfluss und die Geräuschentwicklung optimiert werden. Beispielsweise kann ein größerer Versatz des ersten Segmentpaares gegenüber dem zweiten Segmentpaar den Wasserabfluss verbessern, wohingegen die Geräuschentwicklung verschlechtert wird. Auf der anderen Seite kann ein kleinerer Versatz des ersten Segmentpaares gegenüber dem zweiten Segmentpaar die Geräuschentwicklung verbessern, wohingegen der Wasserabfluss verschlechtert wird.

Der vorteilhafte Laufstreifen mit dem Merkmal, dass entlang der Längsrille das erste Segmentpaar der ersten Rillenwand zu dem ersten Segmentpaar der zweiten Rillenwand versetzt angeordnet ist, weist neben der verbesserten Geräuschabstrahlung im 1000 Hz Bereich sowie eines verbesserten Abriebbildes im bestimmungsgemäßen Gebrauch mit einem Fahrzeugreifen den Vorteil einer weiteren Optimierung zwischen der Geräuschabstrahlung und dem Drainagevermögen auf.

Besonders vorteilhaft ist ein Laufstreifen mit den weiteren Merkmalen gemäß Anspruch 8.

Gemäß der vorteilhaften Ausführungsform des Laufstreifens sind entlang der Längsrille das erste Segmentpaar und/oder das zweite Segmentpaar von Lamelleneinschnitten begrenzt.

D.h., in einem bestimmungsgemäßen Gebrauch des Laufstreifens mit einem Fahrzeugreifen kann mittels der Lamelleneinschnitten der Wasserabfluss weiter verbessert werden.

Der vorteilhafte Laufstreifen mit dem Merkmal, dass entlang der Längsrille das erste Segmentpaar und/oder das zweite Segmentpaar von Lamelleneinschnitten begrenzt sind, weist neben der verbesserten Geräuschabstrahlung im 1000 Hz Bereich sowie eines verbesserten Abriebbildes im bestimmungsgemäßen Gebrauch mit einem Fahrzeugreifen den Vorteil einer weiteren Verbesserung des Drainagevermögens auf.

Besonders vorteilhaft ist ein Laufstreifen mit den weiteren Merkmalen gemäß Anspruch 9.

Gemäß der vorteilhaften Ausführungsform des Laufstreifens weist eine der den Lamelleneinschnitten zugehörige Lamelle einen spitzen Winkel auf.

D.h., in einem bestimmungsgemäßen Gebrauch des Laufstreifens mit einem Fahrzeugreifen verhält sich der Wasserabfluss in Laufrichtung des Fahrzeugreifens anders als in entgegengesetzter Richtung. Durch das Anordnen einer der den Lamelleneinschnitten zugehörigen Lamelle in einem spitzen Winkel kann der Wasserabfluss weiter optimiert werden. Beispielsweise kann ein größerer spitzer Winkel den Wasserabfluss verbessern, wohingegen ein kleinerer spitzer Winkel mehr Turbulenzen verursachen und somit den Wasserabfluss verschlechtern kann.

Der vorteilhafte Laufstreifen mit dem Merkmal, dass eine der den Lamelleneinschnitten zugehörige Lamelle einen spitzen Winkel aufweist, weist neben der verbesserten Geräuschabstrahlung im 1000 Hz Bereich sowie eines verbesserten Abriebbildes im bestimmungsgemäßen Gebrauch mit einem Fahrzeugreifen den Vorteil einer weiteren Verbesserung des Drainagevermögens auf.

Besonders vorteilhaft ist ein Laufstreifen mit den weiteren Merkmalen gemäß Anspruch 10.

Gemäß der vorteilhaften Ausführungsform des Laufstreifens ist ein erster Abstand zwischen der Rillentiefe und dem Rillengrund ein Vielfaches größer als ein zweiter Abstand zwischen der Rillentiefe und der Lauffläche.

D.h., in einem bestimmungsgemäßen Gebrauch des Laufstreifens mit einem Fahrzeugreifen kann durch das Variieren des Verhältnisses zwischen dem ersten Abstand und dem zweiten Abstand der zweite Abstand näher an die Straßenoberfläche gebracht werden, woraus sich eine Verbesserung des Abriebbildes ergeben kann.

Der vorteilhafte Laufstreifen mit dem Merkmal, dass eine der den Lamelleneinschnitten zugehörige Lamelle einen spitzen Winkel aufweist, weist neben der verbesserten Geräuschabstrahlung im 1000 Hz Bereich sowie eines verbesserten Abriebbildes im bestimmungsgemäßen Gebrauch mit einem Fahrzeugreifen den Vorteil einer weiteren Verbesserung des Abriebbildes auf.

Erfindungsgemäß ist ein Fahrzeugreifen mit den Merkmalen gemäß nebengeordnetem Anspruch 11 offenbart. Der erfindungsgemäße Fahrzeugreifen umfasst hierbei einen erfindungsgemäßen Laufstreifen.

Der erfindungsgemäße Fahrzeugreifen weist eine verbesserte Geräuschabstrahlung im 1000 Hz Bereich sowie ein verbessertes Abriebbild auf.

Die Erfindung wird nachfolgend unter Bezugnahme auf die beigefügten Zeichnungen anhand vorteilhafter Ausführungsformen beispielhaft beschrieben.
Die Figur 1 zeigt eine erste vorteilhafte Ausführungsform des erfindungsgemäßen Laufstreifens mit einem Querschnitt der Längsrille.
Die Figur 2 zeigt eine weitere vorteilhafte Ausführungsform des erfindungsgemäßen Laufstreifens mit gleichlangen Längssegmenten in der Längsrille.
Die Figur 3 zeigt eine weitere vorteilhafte Ausführungsform des erfindungsgemäßen Laufstreifens mit unterschiedlich langen Längssegmenten in der Längsrille.
Die Figur 4 zeigt eine weitere vorteilhafte Ausführungsform des erfindungsgemäßen Laufstreifens mit zwei gleichen Segmentpaaren in der Längsrille.
Die Figur 5 zeigt eine weitere vorteilhafte Ausführungsform des erfindungsgemäßen Laufstreifens mit zwei unterschiedlichen Segmentpaaren in der Längsrille.
Die Figur 6 zeigt eine weitere vorteilhafte Ausführungsform des erfindungsgemäßen Laufstreifens mit jeweils einem Segmentpaar an beiden Rillenwänden in der Längsrille.

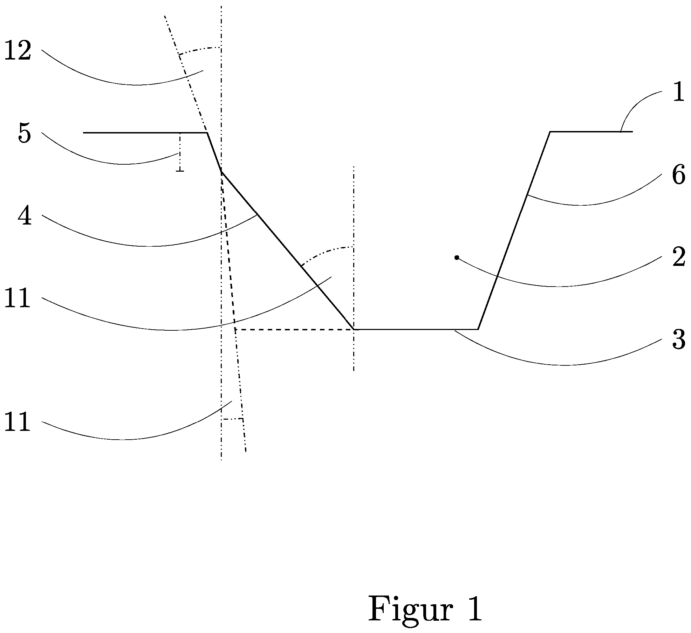

In der Figur 1 ist ein Laufstreifen mit einer Längsrille 2 gezeigt. Die Längsrille 2 des Laufstreifens ist in einem Querschnitt dargestellt, wobei die Längsrille 2 eine erste Rillenwand 4 und eine zweite Rillenwand 6 aufweist. Die erste Rillenwand 4 und die zweite Rillenwand 6 sind über den Rillengrund 3 miteinander verbunden. Zudem ist die erste Rillenwand 4 mit einer Lauffläche 1 des Laufstreifens auf der linken Seite und die zweite Rillenwand 6 mit der Lauffläche 1 auf der rechten Seite verbunden.

Die erste Rillenwand 4 umfasst zwei Abschnitte. Der erste Abschnitt der ersten Rillenwand 4 erstreckt sich von dem Rillengrund 3 in Richtung Lauffläche 1. Ein zweiter Abschnitt der ersten Rillenwand 4 erstreckt sich von der Lauffläche 1 in Richtung Rillengrund 3. Der erste Abschnitt und der zweite Abschnitt sind miteinander verbunden und bilden an der Verbindungsstelle eine Rillentiefe 5.

Die zweite Rillenwand 6 erstreckt sich von dem Rillengrund 3 zu der Lauffläche 1 und weist nur einen geradlinigen Abschnitt auf.

Der erste Abschnitt der ersten Rillenwand 4 bildet mit einer Senkrechten der Lauffläche 1 einen ersten Winkel 11, wohingegen der zweite Abschnitt der ersten Rillenwand 4 mit der Senkrechten der Lauffläche 1 einen zweiten Winkel 12 bildet.

In einem ersten Querschnitt 13 ist der erste Winkel 11 größer als der zweite Winkel 12. Entlang einer Richtung der Längsrille 2 verändert sich das Verhältnis zwischen dem ersten Winkel 11 und dem zweiten Winkel 12 in derart, dass der erste Winkel 11 mit dem Verlauf der Längsrille 2 stetig kleiner wird, bis an einem zweiten Querschnitt 14 der erste Winkel 11 gleich oder kleiner dem zweiten Winkel 12 ist.

In der Figur 1 ist der zweite Querschnitt 14 gestrichelt dargestellt. Hierdurch ist erkennbar, dass der erste Winkel 11 in dem ersten Querschnitt 13 größer ist als der erste Winkel 11 in dem zweiten Querschnitt 14. Zudem ist erkennbar, dass in dem zweiten Querschnitt 14 der erste Winkel 11 kleiner ist als der zweite Winkel 12.

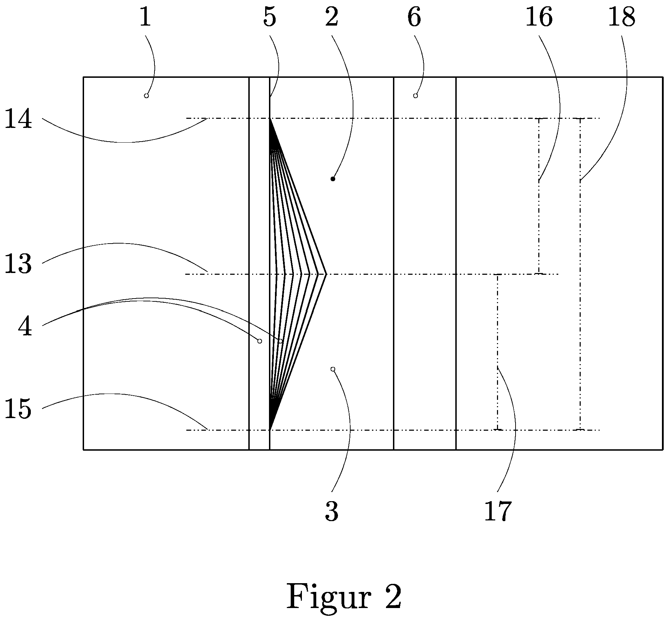

In den Figur 2 bis 6 ist jeweils ein Laufstreifen in der Draufsicht dargestellt. In der Draufsicht bedeutet, dass im bestimmungsgemäßen Gebrauch des Laufstreifens mit einem Fahrzeugreifen die Draufsicht nach radial innen gerichtet ist.

Wie in dem Laufstreifen der Figur 1 ist in dem jeweiligen Laufstreifen der Figuren 2 bis 6 eine Lauffläche 1 des Laufstreifens durch eine Längsrille 2 getrennt. Die Längsrille 2 weist ebenfalls eine erste Rillenwand 4 und eine zweite Rillenwand 6 auf, wobei die erste Rillenwand 4 und die zweite Rillenwand 6 über einen Rillengrund 3 miteinander verbunden sind.

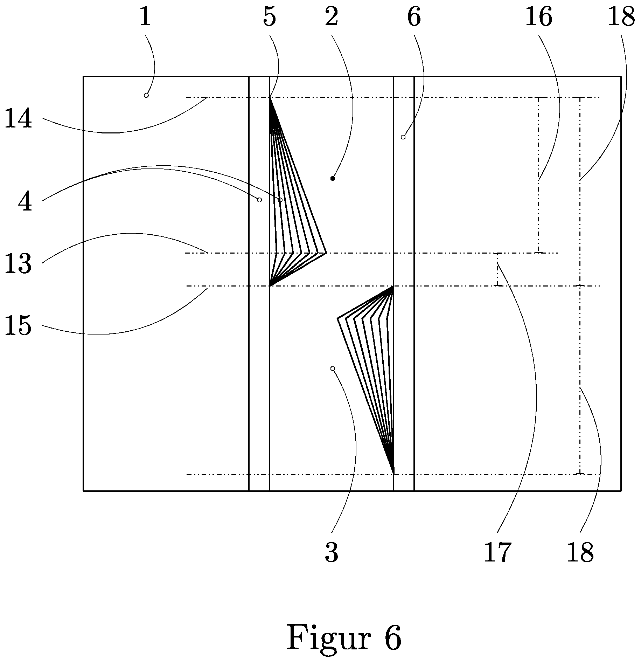

In den Figuren 2 bis 5 weist die erste Rillenwand 4 einen ersten Abschnitt und einen zweiten Abschnitt auf, wohingegen die zweite Rillenwand 6 nur einen geradlinigen Abschnitt aufweist. In der Figur 6 weist die erste Rillenwand 4 und die zweite Rillenwand 6 jeweils einen ersten Abschnitt und einen zweiten Abschnitt auf.

Der erste Abschnitt der ersten Rillenwand 4 der Längsrille 2 ist in den Figuren 2 bis 6 gleich ausgebildet. Der zweite Abschnitt der ersten Rillenwand 4 variiert in den einzelnen Laufstreifen der Figuren 2 bis 6.

Zudem ist in den Figuren 2 bis 6 eine erste Querschnittslinie 13, eine zweite Querschnittslinie 14 und eine dritte Querschnittslinie 15 eingezeichnet. Die parallel zueinander verlaufenden Querschnittslinien 13, 14, 15 sind senkrecht zu dem Verlauf der Längsrille 2 angeordnet.

Ferner ist ein erster Winkel 11 durch Dichteverteilung von einzelnen Linien dargestellt. Umso dichter die Linien dargestellt sind, desto steiler ist der erste Winkel 11. Hieraus ist erkennbar, dass von der ersten Querschnittslinie 13 zu der zweiten Querschnittslinie 14 der erste Winkel 11 stetig kleiner wird, da die Darstellung der Linien dichter wird. Zudem ist ebenfalls erkennbar, dass von der ersten Querschnittslinie 13 zu der dritten Querschnittslinie 15 der erste Winkel 11 stetig kleiner wird, da auch hier die Darstellung der Linien dichter wird. An der zweiten Querschnittslinie 14 und an der dritten Querschnittslinie 15 weist der erste Winkel 11 jeweils einen rechten Winkel auf.

In der Figur 2 ist der zweite Abschnitt der ersten Rillenwand 4 derart ausgebildet, dass ein einzelnes erstes Längssegment 16 und ein einzelnes zweites Längssegment 17 den zweiten Abschnitt bilden. In der Figur 2 ist das erste Längssegment 16 gleich dem zweiten Längssegment 17. D.h., der erste Winkel 11 verkleinert sich in Richtung der zweiten Querschnittslinie 14 in der gleichen Weise wie in Richtung der dritten Querschnittslinie 15. Zudem bilden das erste Längssegment 16 und das zweite Längssegment 17 ein erstes Segmentpaar 18.

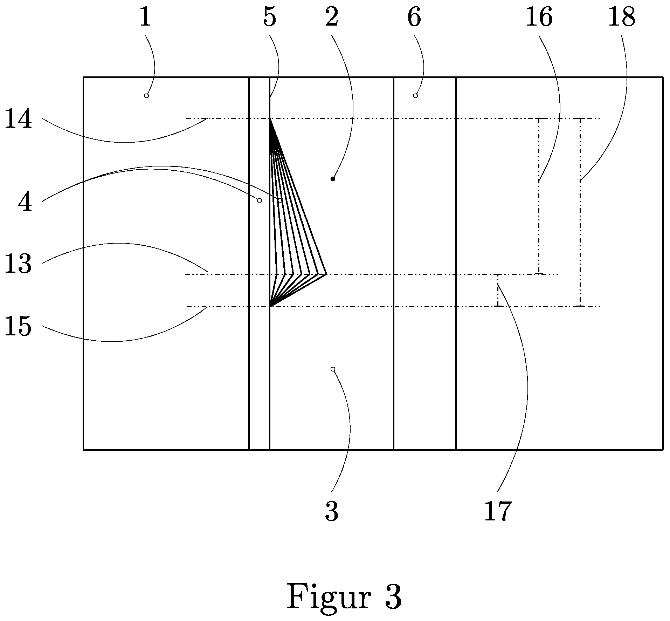

In der Figur 3 ist der zweite Abschnitt der ersten Rillenwand 4 derart ausgebildet, dass wie in der Figur 2 ein einzelnes erstes Längssegment 16 und ein einzelnes zweites Längssegment 17 den zweiten Abschnitt bilden. Im Gegensatz zu der Figur 2 ist in der Figur 3 die Länge des ersten Längssegments 16 ungleich der Länge des zweiten Längssegments 17. Die Länge des ersten Längssegments 16 ist um ein Vielfaches größer als die Länge des zweiten Längssegments 17. D.h., der erste Winkel 11 verkleinert sich in Richtung der zweiten Querschnittslinie 14 langsamer als in Richtung der dritten Querschnittslinie 15. Zudem bilden das erste Längssegment 16 und das zweite Längssegment 17 ein erstes Segmentpaar 18.

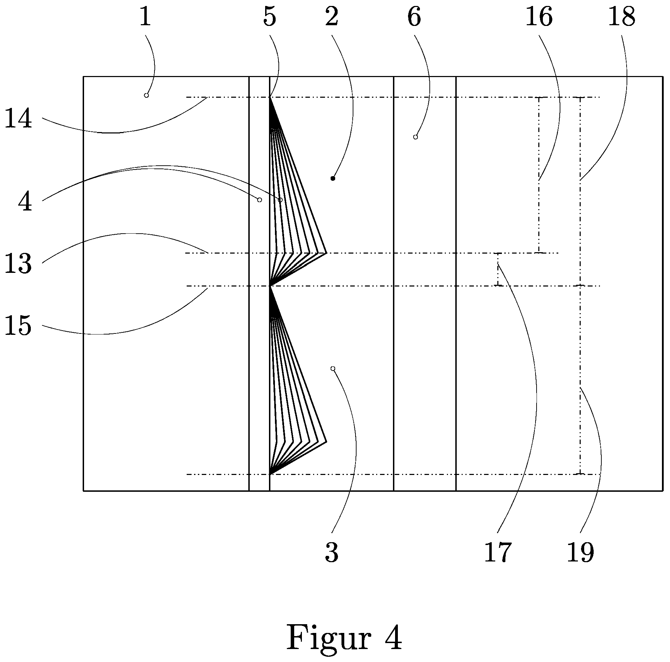

In der Figur 4 ist der zweite Abschnitt der ersten Rillenwand 4 derart ausgebildet, dass ein erstes Segmentpaar 18 und ein zweites Segmentpaar 19 den zweiten Abschnitt bilden. D.h., zwei erste Längssegmente 16 und zwei zweite Längssegmente 17 bilden den zweiten Abschnitt. Dabei ist das erste Längssegment 16 des ersten Segmentpaares 18 gleich dem ersten Längssegment 16 des zweiten Segmentpaares 19, wohingegen das zweite Längssegment 17 des ersten Segmentpaares 18 ebenfalls gleich dem zweiten Längssegment 17 des zweiten Segmentpaares 19 ist. Wie in der Figur 3 sind in der Figur 4 in beiden Segmentpaaren 18, 19 die Längen des ersten Längssegments 16 größer als die Länge des zweiten Längssegments 17.

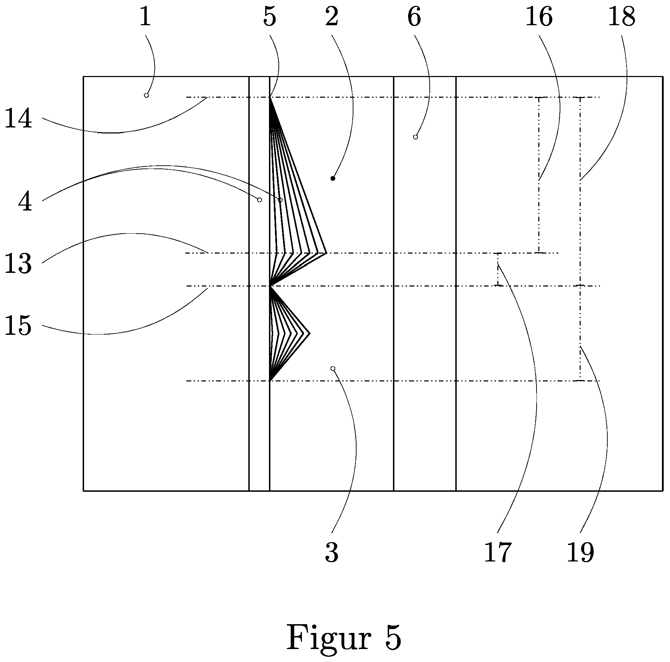

In der Figur 5 ist der zweite Abschnitt der ersten Rillenwand 4 derart ausgebildet, dass wie in der Figur 4 ein erstes Segmentpaar 18 und ein zweites Segmentpaar 19 den zweiten Abschnitt bilden. D.h., zwei erste Längssegmente 16 und zwei zweite Längssegmente 17 bilden den zweiten Abschnitt. Im Gegensatz zu der Figur 4 ist die Länge des ersten Segmentpaares 18 ungleich der Länge des zweiten Segmentpaares 19. Zudem ist die Länge des ersten Längssegments 16 des ersten Segmentpaares 18 ungleich der Länge des ersten Längssegments 16 des zweiten Segmentpaares 19. Des Weiteren ist die Länge des zweiten Längssegments 17 des ersten Segmentpaares 18 ebenfalls ungleich dem zweiten Längssegment 17 des zweiten Segmentpaares 19. Auf der anderen Seite ist das erste Längssegment 16 und das zweite Längssegment 17 in dem zweiten Segmentpaar 19 gleich ausgebildet, wohingegen das erste Segmentpaar 18 wie die Ausführungsform in der Figur 3 ausgebildet ist.

In der Figur 6 ist der zweite Abschnitt der ersten Rillenwand 4 wie in der Figur 3 ausgebildet. Im Gegensatz zu den Figuren 1 bis 5 ist in der Figur 6 die zweite Rillenwand 6 nicht einteilig ausgebildet. Die zweite Rillenwand 6 ist wie die erste Rillenwand 4 in einem ersten Abschnitt und in einen zweiten Abschnitt unterteilt, wobei der erste Abschnitt sich von dem Rillengrund 3 in Richtung Lauffläche 1 und der zweite Abschnitt von der Lauffläche 1 in Richtung Rillengrund 3 erstreckt. Der erste Abschnitt und der zweite Abschnitt der zweiten Rillenwand 6 sind in Höhe der Rillentiefe 5 miteinander verbunden.

Die zweite Rillenwand 6 weist wie die erste Rillenwand 4 ein erstes Segmentpaar 18 auf. Das erste Segmentpaar 18 der zweiten Rillenwand 6 ist dem ersten Segmentpaar 18 der ersten Rillenwand 4 gleich aufgebaut. D.h. das erste Segmentpaar 18 der zweiten Rillenwand 6 weist ein erstes Längssegment 16 und ein zweites Längssegment 17 auf, wobei das erste Längssegment 16 größer ist als das zweite Längssegment 17. Das erste Segmentpaar 18 der zweiten Rillenwand 6 ist punktsymmetrisch zu dem ersten Segmentpaar 18 der ersten Rillenwand 4 aufgebaut.

### Bezugszeichenliste

- 1: Lauffläche
- 2: Längsrille
- 3: Rillengrund
- 4: Rillenwand / erste Rillenwand
- 5: Rillentiefe
- 6: zweite Rillenwand

- 11: erster Winkel
- 12: zweiter Winkel
- 13: erster Querschnitt / erste Querschnittslinie
- 14: zweiter Querschnitt / zweite Querschnittslinie
- 15: dritter Querschnitt / dritte Querschnittslinie
- 16: erstes Längssegment
- 17: zweites Längssegment
- 18: erstes Segmentpaar
- 19: zweites Segmentpaar

## Patentansprüche

1. Laufstreifen für einen Fahrzeugreifen, umfassend
mindestens eine in einer Längsrichtung einer Lauffläche (1) des Laufstreifens erstreckende Längsrille (2), die einen Rillengrund (3) und eine dem Rillengrund (3) angrenzende Rillenwand (4) aufweist,
wobei entlang der Längsrille (2) sich die Rillenwand (4) von einer Rillentiefe (5) bis zu dem Rillengrund (3) unter einem mit einer Senkrechten der Lauffläche (1) eingeschlossenen ersten Winkel (11) erstreckt,
wobei in einem ersten Querschnitt (13) senkrecht zu der Längsrille (2) der erste Winkel (11) größer ist als ein zweiter Winkel (12),
wobei ausgehend von dem ersten Querschnitt (13) in eine erste Richtung entlang der Längsrille (2) der erste Winkel (11) stetig kleiner wird bis in einem zweiten Querschnitt (14) der erste Winkel (11) kleiner oder gleich dem zweiten Winkel (12) ist,
wobei der Abstand zwischen dem ersten Querschnitt (13) und dem zweiten Querschnitt (14) ein erstes Längssegment (16) bildet,
wobei ausgehend von dem ersten Querschnitt (13) in eine zweite, der ersten Richtung entgegengesetzten Richtung der erste Winkel (11) stetig kleiner wird bis in einem dritten Querschnitt (15) der erste Winkel (11) kleiner oder gleich dem zweiten Winkel (12) ist, wobei der Abstand zwischen dem ersten Querschnitt (13) und dem dritten Querschnitt (15) ein zweites Längssegment (17) bildet,
**dadurch gekennzeichnet,**
**dass** entlang der Längsrille (2) sich die Rillenwand (4) unter dem zweiten Winkel (12) von der Lauffläche (1) bis zu der Rillentiefe (5) erstreckt.

2. Laufstreifen nach Anspruch 1, **dadurch gekennzeichnet,**
**dass** das erste Längssegment (16) und das zweite Längssegment (17) unterschiedliche Längen aufweisen.

3. Laufstreifen nach einem der vorhergehenden Ansprüche,
**dadurch gekennzeichnet,**
**dass** das erste Längssegment (16) und das zweite Längssegment (17) ein erstes Segmentpaar (18) bilden und die Rillenwand (4) mindestens ein zweites Segmentpaar (19) aufweist.

4. Laufstreifen nach Anspruch 3, **dadurch gekennzeichnet,**
**dass** das erste Segmentpaar (18) und das zweite Segmentpaar (19) unterschiedliche Längen aufweisen.

5. Laufstreifen nach einem der vorhergehenden Ansprüche,
**dadurch gekennzeichnet,**
**dass** das erste Längssegment (16) des ersten Segmentpaares (18) und das erste Längssegment (16) des zweiten Segmentpaares (19) unterschiedliche Längen aufweisen.

6. Laufstreifen nach einem der vorhergehenden Ansprüche,
**dadurch gekennzeichnet,**
**dass** die Rillenwand eine erste Rillenwand (4) ist und die Längsrille (2) eine zweite Rillenwand (6) aufweist.

7. Laufstreifen nach Anspruch 6, **dadurch gekennzeichnet,**
**dass** entlang der Längsrille (2) das erste Segmentpaar (18) der ersten Rillenwand (4) zu dem ersten Segmentpaar (18) der zweiten Rillenwand (6) versetzt angeordnet ist.

8. Laufstreifen nach einem der vorhergehenden Ansprüche,
**dadurch gekennzeichnet,**
**dass** entlang der Längsrille (2) das erste Segmentpaar (18) und/oder das zweite Segmentpaar (19) von Lamelleneinschnitten begrenzt sind.

9. Laufstreifen nach Anspruch 8, **dadurch gekennzeichnet,**
**dass** eine der den Lamelleneinschnitten zugehörige Lamelle einen spitzen Winkel aufweist.

10. Laufstreifen nach einem der vorhergehenden Ansprüche,
**dadurch gekennzeichnet,**
**dass** ein erster Abstand zwischen der Rillentiefe (5) und dem Rillengrund (3) ein Vielfaches größer ist als ein zweiter Abstand zwischen der Rillentiefe (5) und der Lauffläche (1).

11. Fahrzeugreifen, umfassend einen Laufstreifen nach einem der Ansprüche 1 bis 10.
